# EUROPEAN PATENT APPLICATION

(11) **EP 4 579 192 A1**
(43) Date of publication of application: **02.07.2025**
(21) Application number: 23945645.2
(22) Date of filing: 06.11.2023
(51) Int. Cl.: G01C 21/20

(54) **PATH PLANNING METHOD AND APPARATUS FOR ROBOT, AND ELECTRONIC DEVICE AND MEDIUM**

(30) Priority: 19.07.2023 CN 202310887788
(71) Applicant: Zhejiang Sunseeker Industrial Co., Ltd., Jinhua, Zhejiang 321000 (CN)
(72) Inventor: HU, Lang, Jinhua, Zhejiang 321000 (CN); ZHANG, Yanqing, Jinhua, Zhejiang 321000 (CN)
(74) Representative: Manna, Sara
(86) International application number: PCT/CN2023/130027
(87) International publication number: WO 2025/015765

(57) **Abstract**

This application provides a robot path planning method, device, electronic equipment, and medium. The method comprises: constructing a planar graph of the area to be worked on, and using a preset partitioning algorithm to partition the planar graph to obtain multiple work partitions, and determining the work order of the robot in each work partition; determining the bow-shaped path parameter and path baseline in the first work partition when moving according to the work order to the first work partition among multiple work partitions; controlling the robot to move in the first working partition based on the bow-shaped path parameter and path baseline; when moving to the next work partition of the first work partition, determining the bow-shaped path parameter and path baseline of the first work partition as the bow-shaped path parameter and path baseline of the next work partition; determining the starting route of the next work partition based on the path baseline, bow-shaped path parameters, and boundary information of the next work partition; controlling the robot's movement in the next work partition based on starting route and bow-shaped path parameter.

## Description

This application claims the priority of the following patent application, the entire content of which is incorporated in this application by reference: a Chinese patent application with application number 2023108877881, and invention title "Robot path planning method, device, electronic equipment and medium" submitted to the State Intellectual Property Office of P.R.China on July 19, 2023.

### Technical field

The present application relates generally to the field of robot control technology, and more specifically to a robot path planning method, device, electronic equipment and medium.

### Background

With the development of science and technology, more and more tasks can be completed by robots. Among them, for the control of robots, the path planning of the robot is an important part of the control, especially for mobile robots, path planning is particularly crucial. Currently, for lawn mowing robots, due to the complex grass conditions, a large working area needs to be partitioned into smaller partitions. Usually, a path planning is performed every time it enters a partition. However, the lawn mower robot will leave mowing traces on the grass during its work. When planning the partition path, the mowing traces may become disordered between different areas, which will result in the lawn appearing uneven and with disordered mowing traces after the lawn mowing robot completes its task.

### Summary

The purpose of this disclosure is to provide an improved robot path planning method, device, electronic equipment, and medium that solves at least one of the aforementioned problems.

According to one aspect of this disclosure, the purpose is at least partially achieved through a robot path planning method. The path planning method comprises:

constructing a planar graph of the area to be worked on, and using a preset partitioning algorithm to partition the planar graph to obtain multiple work partitions, and determining the work order of the robot in each work partition; when proceeding to a first work partition among the multiple work partitions according to the work order, determining a bow-shaped path parameter and path baseline in the first work partition; controlling the robot to move in the first work partition according to the bow-shaped path parameter and the path baseline; when moving to the next work partition of the first work partition, determining the bow-shaped path parameter and path baseline of the first work partition as a bow-shaped path parameter and path baseline of the next work partition; determining a starting route of the next work partition according to the path baseline, the bow-shaped path parameter and boundary information of the next work partition; controlling the robot's movement in the next work partition based on the starting route and the bow-shaped path parameter.

Therefore, a robot path planning method with the above featuresconstructs a planar graph of the area to be worked on, and uses a preset partitioning algorithm to partition the planar graph to obtain multiple work partitions, and determines the work order of the robot in each work partition; when proceeding to a first work partition among the multiple work partitions according to the work order, determines a bow-shaped path parameter and path baseline in the first work partition; controls the robot to move in the first work partition according to the bow-shaped path parameter and the path baseline; when moving to the next work partition of the first work partition, determines the bow-shaped path parameter and path baseline of the first work partition as a bow-shaped path parameter and path baseline of the next work partition; determines a starting route of the next work partition according to the path baseline, the bow-shaped path parameter and boundary information of the next work partition; controls the robot's movement in the next work partition based on the starting route and the bow-shaped path parameter. Based on this, this application can use path baseline and path parameter to plan the bow-shaped path in the next work partition while moving to the first work partition. As the path baseline and path parameter are the path baseline and path parameters in the first work partition, planning based on this path baseline and path parameters can avoid the situation of the bow-shaped path planned in the next work partition and the first work partition being disordered, thereby avoiding disorderly mowing traces and uneven grass surfaces.

According to the second aspect of this disclosure, the purpose is at least partially obtained through a robot path planning device. This device comprises:

construction module, used to construct a planar graph of the area to be worked on, and partition the planar graph using a preset partitioning algorithm to obtain multiple work partitions, and determine the work order of the robot in each work partition; first determination module, used to determine a bow-shaped path parameter and path baseline in a first work partition when moving to the first work partition among the multiple work partitions in accordance with the work order;first control module, used to control the robot to move in the first work partition according to the bow-shaped path parameter and the path baseline; second determination module, used to determine the path parameter and path baseline of the first work partition as the path parameter and path baseline of the next work partition when moving to the next work partition of the first work partition; third determination module, used to determine a starting route of the next working partition according to the path baseline, the bow-shaped path parameters and the boundary information of the next working partition; second control module, used to control the robot to move in the next work partition based on the starting route and the bow-shaped path parameter.

According to the third aspect of this disclosure, the purpose is at least partially obtained through a robot path planning method. The method comprises:

performing path planning according to the method of any one exemplary embodiment of this application, so that the intervals between the target paths in different work partitions are the same, and the target paths in the target areas in adjacent work partitions are aligned in sequence; the target path refers to a first path in the planned bow-shaped path, and the target area refers to the area in adjacent work partitions that overlaps in projection along the direction of the target path.

According to the fourth aspect of this disclosure, the purpose is at least partially obtained through an electronic equipment. The electronic equipment comprises:

one or more processors; a storage device for storing one or more programs; when one or more programs are executed by one or more processors, such that one or more processors implement the robot path planning method of any one exemplary embodiment of this application.

According to the fifth aspect of this disclosure, the purpose is at least partially obtained through acomputer-readable storage medium. The computer-readable storage medium has computer programs stored thereon, wherein, when the computer programs is executed by a processor, the robot path planning method of any one exemplary embodiment of this application is implemented.

Details of at least one embodiment will be described in the following drawings and descriptions. Other features, objectives, and advantages will be evident from the description, schema, and claims.

### Brief description of the drawings

Figure 1 is a schematic flowchart of a robot path planning method provided in Embodiment 1 of the present application;
Figure 2 is a shape diagram of the bow-shaped path provided in Embodiment 1 of the present application;
Figure 3 is a schematic diagram of the bow-shaped path when there are obstacles provided in Embodiment 1;
Figure 4 is a schematic diagram of the structure of a robot path planning device provided in Embodiment 2 of the present application;
Figure 5 is a schematic diagram of a structure of an electronic equipment provided in Embodiment 3 of the present application.

### Detailed description

The following will provide a detailed description of the present application in conjunction with the specific embodiments shown in the accompanying drawings. However, these implementation methods do not limit the present application, and any structural, methodological, or functional changes made by ordinary technical personnel in the art based on these implementation methods are included in the scope of protection of the present application.

### Embodiment one

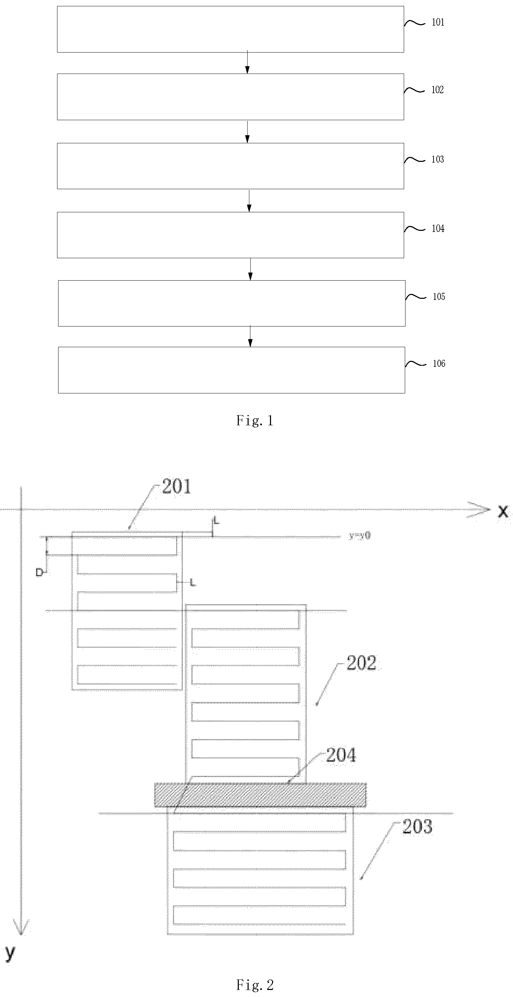

Please refer to Figure 1. Figure 1 is a schematic flowchart of a robot path planning method provided in Embodiment 1 of the present application. This embodiment can be applied to the control process of a lawn mowing robot. As shown in Figure 1, the robot path planning method provided in this embodiment comprises the following steps:

Step 101: constructing a planar graph of the area to be worked on, and using a preset partitioning algorithm to partition the planar graph to obtain multiple work partitions, and determining the work order of the robot in each work partition.

In this step, the area to be worked on refers to the area where the robot needs to work. When constructing the planar graph of the area to be worked on, the robot can be used to scan along the edge of the area to be worked on to obtain the planar graph of the area to be worked on, or manual scanning can be used to obtain the planar graph.

In addition, due to the complex grassland conditions and limited control accuracy, the robot cannot maintain a long straight line walk. Therefore, in this step, the planar graph will also be partitioned to obtain multiple work partitions. For example, the planar graph can be partitioned according to the maximum rectangular area. For example, the maximum rectangle is determined according to the parameter characteristics of the robot to ensure that the robot can walk in a straight line within the maximum rectangle. Starting from the initial position of the robot, determine the largest rectangular area in the plane, and then based on the largest rectangular area, determine all rectangular areas adjacent to the largest rectangular area in the area except the largest rectangular area in the plane, determine the next rectangular area among these adjacent rectangular areas, repeat this step until all planar graphs are partitioned, and each obtained rectangular area is the work partition.

It should be noted that the above partitioning method can be applied to the area to be worked on with a relatively regular plan graph. For the area to be worked on with a complex planar graph, other preset partitioning algorithms can be used for partitioning. For details, please refer to related technologies, which will not be described again here.

In this step, the work order can be determined based on the adjacent situation of each work partition. For example, the work partition adjacent to the initial position of the robot can be determined as the work partition with order 1. The work partition adjacent to work partition with order 1 is determined as the work partition with order 2, and so on.

In addition, if a work partition is adjacent to multiple work partitions, the adjacent work partitions can be sorted in a clockwise or counterclockwise direction. It should be noted that there are many ways to sort. For details, please refer to related technologies and will not be described again here.

Step 102: when proceeding to the first work partition among the multiple work partitions according to the work order, determining the bow-shaped path parameter and path baseline in the first work partition.

In this step, the first work partition can be any work partition among all work partitions, it can be the initial one, that is, the work partition with order 1, or other work partitions, that is, the other work partitions with order other. In addition, the bow-shaped path parameters in this step may include a path spacing and a preset minimum boundary distance. The path spacing is the spacing between two adjacent first paths in the bow-shaped path. Taking a lawn mowing robot as an example, the path spacing is determined by the overlap of the robot's cutterhead diameter and the cutting range of the two adjacent first paths. The preset minimum boundary distance is the minimum allowable distance from the cutterhead center to the boundary. It should be noted that the bow shaped-path refers to a path shaped like the Chinese character " 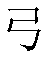 ".

For example, please refer to Figure 2. Figure 2 is a shape diagram of the bow-shaped path provided in Embodiment 1 of the present application, which illustrates the first work partition 201, the second work partition 202, the third work partition 203 and the non-work area 204 between the second work partition and the third work partition. In the bow-shaped path shown in Figure 2, the first path and the second path are alternately head-to-tail connected to form a bow-shaped path. As shown in Figure 2, the first path is a path that is parallel to each other and extends along the x-axis direction. The length of the first path is usually longer than the length of the second path, and its length changes with the shape of the work partition, sometimes it is shorter than the second path. As shown in Figure 2, the second path is a path extending along the x-axis direction, the second path connects two adjacent first paths.

When determining the bow-shaped path parameter and path baseline in the first work partition, if the first work partition is the initial work partition, there are two determination methods.

First, the user's operation information can be obtained, and the path parameter and path baseline can be calculated based on the operation information. For example, the method is for the user to determine the bow-shaped path parameter and the path baseline through input. Usually, a plane coordinate system is set in a planar graph. For an example, see Figure 2 above. The plane coordinate system is set with two horizontal and vertical coordinate axes, namely the x coordinate axis and the y coordinate axis.

Secondly, the bow-shaped path planning can also be performed in the first work partition; determine any path along the target axis direction in the planned bow-shaped path as the path baseline in the first work partition; and extract the path parameter from the planned bow-shaped path as the bow-shaped path parameter in the first work partition.

For example, the second method is usually used when the first work partition is the initial partition. Since the planar graph of the work area has been constructed in the aforementioned process, after the partitioning, the edge parameters in the first work partition are all known, the edge parameters may include the coordinate value of any point on the edge, the maximum length along the y-axis direction, and the maximum length along the x-axis.

Based on these two maximum lengths and the working width of the robot, the bow shaped path parameters are determined. Taking the lawn mowing robot as an example, the working width is the cutting width of the cutterhead. For example, the size between the maximum length along the y-axis and the maximum length along the x-axis can be firstly determined, and the larger one can be used as the extension direction of the first path. This setting can reduce the number of turns the robot makes, to a certain extent, which can accelerate the work speed and reduce the energy consumption per operation.

Finally, the path spacing, the preset minimum boundary distance, and the first path extension direction are determined as the bow-shaped path parameters. Then use the path spacing, the preset minimum boundary distance, the first path extension direction and the coordinate value of any point on the edge (the optimal one is the point on the edge with the shortest straight line distance from the current coordinate of the robot) to plan a bow-shaped path, and choose any first path as the path baseline.

Step 103: controlling the robot to move in the first work partition according to the bow-shaped path parameter and the path baseline.

In this step, it is enough to walk according to the bow-shaped path in the previous steps. However, obstacles may be encountered during the specific walking process. For this situation, this embodiment also provides a corresponding planning solution.

For example, when the robot is moving in any work partition and an obstacle is detected, the obstacle point is recorded where the planned bow-shaped path encounters the obstacle for the first time; using the obstacle point as the starting point, the robot is controlled to move along the edge of the obstacle and obtain the edge path of the obstacle; determine the intersection points of the edge path and all paths along the target axis in the planned bow-shaped path, and segment the bow-shaped path according to the intersection points; re-plan the bow-shaped path of the edge path according to the segmented bow-shaped path and obstacles to obtain at least one bow-shaped sub-path; control the robot to move in any work partition according to the bow-shaped sub-path.

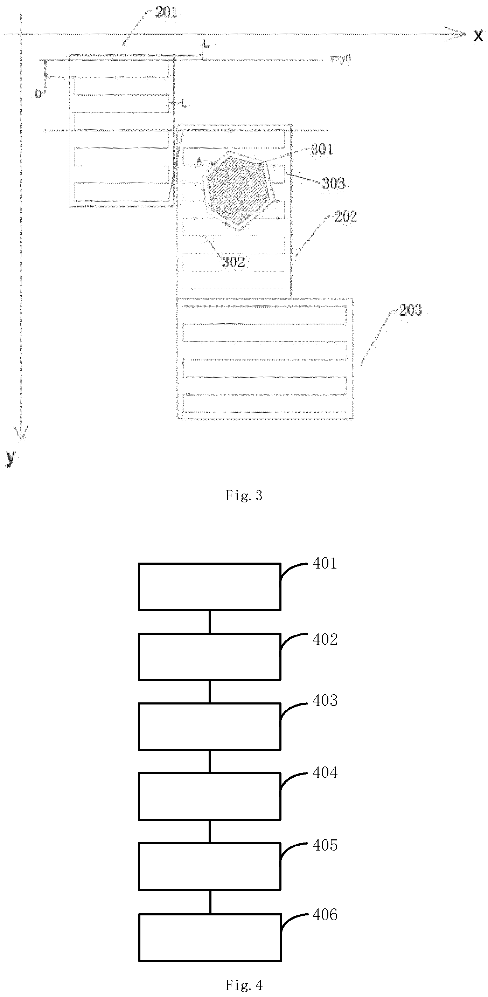

It should be noted that when the robot moves along the bow-shaped path, it may encounter obstacles at any time. At this time, the obstacle point where the obstacle is encountered for the first time is determined as the obstacle point. For an example, see Figure 3. Figure 3 is a schematic diagram of the bow-shaped path when there are obstacles provided in Embodiment 1. Figure 3 shows an obstacle 301, a first new bow-shaped path 302 and a second new bow-shaped path 303.

Then, after obtaining the edge path relying on the movement along the edge of the obstacle, the idea of fusion and elimination of the original bow-shaped path and the edge path is used to remove the part of the path covered by the obstacle from the original bow-shaped path, which can retain the movement path of the original bow-shaped path to the greatest extent.

In addition, when re-planning the bow-shaped path based on the segmented bow-shaped path and the edge path of the obstacle, it refers to fusing the bow-shaped path with the obstacle edge path to obtain a new bow-shaped path. The number of the new bow-shaped path may be at least one, as shown in FIG. 3, which is two new bow-shaped paths: the first new bow-shaped path 302 and the second new bow-shaped path 303.

Step 104: When moving to the next work partition of the first work partition, determining the bow-shaped path parameter and path baseline of the first work partition as the bow-shaped path parameter and path baseline of the next work partition.

In this step, in order to ensure that the planned bow-shaped paths in the two work partitions are disordered, the next work partition can still use the bow-shaped path parameter and path baseline of the previous work partition. Certainly, there may also be a non-working area between the two work partitions, and for this situation, this embodiment also makes corresponding improvements.

For example, when moving to the next work partition of the first work partition, determine whether there is a non-working area between the first work partition and the next work partition; if there is a non-working area, determine the bow-shaped path parameter and path baseline of the next work partition according to the width of the non-working area in the vertical direction along the target axis; if there is no non-working area, determine the bow-shaped path parameter and path baseline of the first work partition as the bow-shaped path parameter and path baseline of the next work partition.

It should be noted that the non-working area refers to a preset area that does not require work, such as a hardened area in the grass. The lawn mower does not need to work on this area, so this area needs to be ignored. In this case, the determination of the bow-shaped path parameter and path baseline can be continued based on the width of the non-working area (along the vertical direction of the target axis).

For example, if the width of the non-working area in the vertical direction along the target axis is less than the preset width, the bow-shaped path parameter and path baseline of the first work partition are determined as the bow-shaped path parameter and path baseline of the next work partition; If the width of the area in the vertical direction along the target axis is greater than or equal to the preset width, the bow-shaped path parameter and path baseline of the next work partition are determined according to the baseline determination algorithm of the initial work partition.

For example, the preset width may be the difference between the aforementioned path spacing and twice the minimum boundary distance. If the width of the non-working area along the vertical direction of the target axis is less than the preset width, it means that the non-working area is narrow and can be ignored. At this time, it is possible to continue planning along the bow-shaped path of the first work partition, treating the first and next work partitions as one work partition and planning a complete bow-shaped path.

Certainly, when there is no non-working area, it is also possible to continue planning along the bow-shaped path of the first work partition, that is, considering the first work partition and the next work partition as one work partition, planning a complete bow-shaped path.

If the width of the non-working area along the vertical direction of the target axis is greater than the preset width, it means that the non-working area is wider. At this time, it is necessary to re-plan the bow-shaped path, determine the path baseline according to the baseline determination algorithm of the first work partition, and continue to use the bow-shaped path parameter of the first work partition.

Step 105: Determining the starting route of the next work partition according to the path baseline, the bow-shaped path parameter and the boundary information of the next work partition.

In this step, when determining the starting route of the next work partition, the overlapping area of the projection of the next work partition and the first work partition along the target axis direction can be determined according to the boundary information of the next work partition. The initial first path in the vertical direction of the target axis in the overlapping area of the first work partition can be determined as the starting position, and the starting route of the next work partition can be determined according to this starting position.

Referring to Figure 2, for example, the path baseline of the first work partition 201 is determined as y=y0, and the initial first path of the second work partition is the fifth first path in the first work partition. There are four path spacings between the first path and the initial first path of the first work partition, then the position of the initial first path is y=y0+D, where D is the path spacing. Then, y=y0+4D is the starting position of the starting route of the next work partition 202.

In addition, in some embodiments, every time the robot reaches a new work partition, the path baseline is re-determined. The starting route of the work partition is collinear with the path baseline, but the path spacing adopts the path spacing of the previous work partition, the distance between the path baseline and the first work partition is an integer multiple of the path spacing.

Step 106: Controlling the robot to move in the next work partition based on the starting route and the bow-shaped path parameters.

In this step, it is sufficient to control the robot to move in the next work partition based on the starting route and the bow-shaped path parameters. For an example, please refer to the aforementioned step 103, which will not be described again here.

In addition, the path planning is performed according to the method of this embodiment so that the intervals between the target paths in different work partitions are the same, and the target paths in the target areas in adjacent work partitions are aligned in sequence; the target path refers to the first path in the planned bow-shaped path, and the target area refers to the area in adjacent work partitions that overlaps in projection along the direction of the target path.

In the embodiment of the present application, a planar graph of the area to be worked on is constructed, and a preset partitioning algorithm is used to partition the planar graph to obtain multiple work partitions, and the work order of the robot in each work partition is determined; the bow-shaped path parameter and path baseline in the first work partition are determined when moving in the work order to the first work partition among multiple work partitions; the robot is controlled to move in the first work partition according to the bow-shaped path parameter and path baseline; when moving to the next work partition of the first work partition, the bow-shaped path parameter and path baseline of the first work partition are determined as the bow-shaped path parameter and path baseline of the next work partition; the starting route of the next work partition based on the path baseline, bow-shaped path parameter, and boundary information of the next work partition are determined; the robot's movement in the next work partition is controlledbased on the starting route and bow-shaped path parameters. Based on this, this application can use path baseline and path parameter to plan the bow-shaped path in the next work partition while moving to the first work partition. As the path baseline and path parameter are the path baseline and path parameters in the first work partition, planning based on this path baseline and path parameters can avoid the situation of the bow-shaped path planned in the next work partition and the first work partition being disordered, thereby avoiding disorderly mowing traces and uneven grass surfaces.

### Embodiment 2

Please refer to Figure 4, which is a schematic diagram of the structure of a robot path planning device provided in Embodiment 2 of the present application.

As shown in Figure 4, the robot path planning device provided in Embodiment 2 of the present application exemplarily comprises:

Construction module 401, which is used to construct a planar graph of the area to be worked on, and partition the planar graph using a preset partitioning algorithm to obtain multiple work partitions, and determine the work order of the robot in each work partition;

First determination module 402, which is used to determine the bow-shaped path parameter and path baseline in the first work partition when moving to the first work partition among the multiple work partitions in accordance with the work order;

First control module 403, which is used to control the robot to move in the first work partition according to the bow-shaped path parameter and the path baseline;

Second determination module 404, which is used to determine the path parameter and path baseline of the first work partition as the path parameter and path baseline of the next work partition when moving to the next work partition of the first work partition;

Third determination module 405, which is used to determine the starting route of the next working partition according to the path baseline, the bow-shaped path parameters and the boundary information of the next working partition;

Second control module 406, which is used to control the robot to move in the next work partition based on the starting route and the bow-shaped path parameter.

### Embodiment three

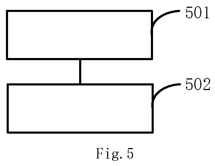

Please refer to Figure 5, which is a schematic diagram of a structure of an electronic equipment provided in Embodiment 3 of the present application.

As shown in Figure 5, the electronic equipment provided by this embodiment comprises: one or more processors; a storage device for storing one or more programs.

When one or more programs are executed by one or more processors, such that one or more processors implement the robot path planning method provided in the embodiments described above. The method mainly comprises:

constructing a planar graph of the area to be worked on, and using a preset partitioning algorithm to partition the planar graph to obtain multiple work partitions, and determine the work order of the robot in each work partition; determining the bow-shaped path parameter and path baseline in the first work partition when moving according to the work order to the first work partition among multiple work partitions; controlling the robot to move in the first working partition based on the bow-shaped path parameter and path baseline; when moving to the next work partition of the first work partition, determining the bow-shaped path parameter and path baseline of the first work partition as the bow-shaped path parameter and path baseline of the next work partition; determining the starting route of the next work partition based on the path baseline, bow-shaped path parameters, and boundary information of the next work partition; controlling the robot's movement in the next work partition based on starting route and bow-shaped path parameter.

### Embodiment four

Embodiment 4 of the present application also provides a computer-readable storage medium on which a computer program is stored. When the program is executed by a processor, the robot path planning method as provided in the embodiments described above is implemented. The method mainly comprises:

constructing a planar graph of the area to be worked on, and using a preset partitioning algorithm to partition the planar graph to obtain multiple work partitions, and determine the work order of the robot in each work partition; determining the bow-shaped path parameter and path baseline in the first work partition when moving in the work order to the first work partition among multiple work partitions; controlling the robot to move in the first work partition based on the bow-shaped path parameter and path baseline; when moving to the next work partition of the first work partition, determining the bow-shaped path parameter and path baseline of the first work partition as the bow-shaped path parameter and path baseline of the next work partition; determining the starting route of the next work partition based on the path baseline, bow-shaped path parameter, and boundary information of the next work partition; controlling the robot's movement in the next work partition based on the starting route and bow-shaped path parameter.

It should be understood that in the description of the specific embodiments of the present application, terms such as "first" and "second" are only used for descriptive purposes and cannot be understood as indicating or implying relative importance or implying the quantity of technical features indicated. Therefore, features defined as "first" and "second" may explicitly or implicitly include one or more of these features.

In the specific embodiments of the present application, unless otherwise clearly stated and limited, terms such as "joined" and "connected" should be understood in a broad sense. For example, it can be a fixed connection, a movable connection, or a detachable connection, or integration; it can be directly connected, or it can be indirectly connected through an intermediate medium; it can be the internal connection of two elements or the interaction between two elements. For those of ordinary skill in the art, the specific meanings of the above terms in this application can be understood according to specific circumstances.

In the specific embodiments of the present application, unless otherwise clearly stated and limited, the first feature being "on" or "below" the second feature may include direct contact between the first and second features, or may include that the first and second features are not in direct contact but they are in contact through another feature.

In the specific embodiments of the present application, unless otherwise clearly stated and limited, the term "multiple" refers to two or more.

It should be understood that although this specification is described according to the embodiments, not every embodiment only contains an independent technical solution. This description of the specification is only for the sake of clarity. Those skilled in the art should regard the specification as a whole, the technical solutions in each embodiment can also be appropriately combined to form other embodiments that can be understood by those skilled in the art.

The series of detailed descriptions listed above are only specific descriptions of the feasible implementation modes of the present application. They are not used to limit the protection scope of the present application. Any equivalents that do not depart from the technical spirit of the present application are All implementations or changes should be included in the protection scope of this application.

## Claims

1. A robot path planning method, wherein the method comprises:
constructing a planar graph of the area to be worked on, and using a preset partitioning algorithm to partition the planar graph to obtain multiple work partitions, and determining work order of the robot in each work partition;
when proceeding to a first work partition among the multiple work partitions according to the work order, determining a bow-shaped path parameter and path baseline in the first work partition;
controlling the robot to move in the first work partition according to the bow-shaped path parameter and the path baseline;
when moving to a next work partition of the first work partition, determining the bow-shaped path parameter and path baseline of the first work partition as a bow-shaped path parameter and path baseline of the next work partition;
determining a starting route of the next work partition according to the path baseline, the bow-shaped path parameter and boundary information of the next work partition;
controlling the robot's movement in the next work partition based on the starting route and the bow-shaped path parameter.

2. The method of claim 1,wherein determining the bow-shaped path parameter and path baseline in the first work partition comprises:
if the first work partition is an initial work partition,obtaining the user's operation information, and determine the bow-shaped path parameter and path baseline according to the operation information.

3. The method of claim 1,wherein determining the bow-shaped path parameter and path baseline in the first work partition comprises:
if the first work partition is an initial partition, planning the bow-shaped path in the first work partition;
determining any path along a target axis direction in the planned bow-shaped path as the path baseline in the first work partition, and extracting the path parameter from the planned bow-shaped path as the bow-shaped path parameter in the first work partition.

4. The method of claim 3, wherein the bow-shaped path parameter includes a path spacing.

5. The method of claim 1, wherein the method further comprises:
when moving to the next work partition of the first work partition, determining whether there is a non-working area between the first work partition and the next work partition;
if there is a non-working area, determining the bow-shaped path parameter and path baseline of the next work partition according to width of the non-working area in vertical direction along the target axis;
if there is no non-working area, determining the bow-shaped path parameter and path baseline of the first work partition as a bow-shaped path parameter and path baseline of the next work partition.

6. The method of claim 5, wherein determining the bow-shaped path parameter and path baseline of the next work partition according to the width of the non-working area in the vertical direction along the target axis comprises:
if width of the non-working area in the vertical direction along the target axis is less than preset width, determining the bow-shaped path parameter and path baseline of the first work partition as the bow-shaped path parameter and path baseline of the next work partition;
if the width of the non-working area in the vertical direction along the target axis is greater than or equal to the preset width, determining the bow-shaped path parameter and path baseline of the next work partition according to a baseline determination algorithm of the initial work partition.

7. The method of any one of claims 1-6, wherein the method further comprises:
when the robot is moving in any work partition, if an obstacle is detected, recording a obstacle point where the planned bow-shaped path encounters the obstacle for the first time;
using the obstacle point as starting point, controlling the robot to move along an edge of the obstacle and obtaining an edge path of the obstacle;
determining intersection points of the edge path and all paths along the target axis in the planned bow-shaped path, and segmenting the bow-shaped path according to the intersection points;
re-planning the bow-shaped path of the edge path according to the segmented bow-shaped path and obstacles to obtain at least one bow-shaped sub-path;
controlling the robot to move in any work partition according to the bow-shaped sub-path.

8. A robot path planning device, wherein the device comprises:
construction module, used to construct a planar graph of the area to be worked on, and partition the planar graph using a preset partitioning algorithm to obtain multiple work partitions, and determine the work order of the robot in each work partition;
first determination module, used to determine a bow-shaped path parameter and path baseline in a first work partition when moving to the first work partition among the multiple work partitions in accordance with the work order;
first control module, used to control the robot to move in the first work partition according to the bow-shaped path parameter and the path baseline;
second determination module, used to determine the path parameter and path baseline of the first work partition as the path parameter and path baseline of the next work partition when moving to the next work partition of the first work partition;
third determination module,used to determine a starting route of the next working partition according to the path baseline, the bow-shaped path parameters and the boundary information of the next working partition;
second control module,used to control the robot to move in the next work partition based on the starting route and the bow-shaped path parameter.

9. A robot path planning method, wherein the method comprises:
performing path planning according to the method of any one of claims 1-7, so that the intervals between the target paths in different work partitions are the same, and the target paths in the target areas in adjacent work partitions are aligned in sequence;
the target path refers to a first path in the planned bow-shaped path, and the target area refers to the area in adjacent work partitions that overlaps in projection along the direction of the target path.

10. An electronic equipment, wherein, it comprises:
one or more processors;
a storage devicefor storing one or more programs;
when one or more programs are executed by one or more processors, such that one or more processors implement the robot path planning method of any one of claims 1-7 and 9.

11. A computer-readable storage medium, having computer programs stored thereon, wherein, when the computer programsare executed by a processor, the robot path planning method of any one of claims 1-7 and 9 is implemented.
